# EUROPÄISCHE PATENTANMELDUNG

(11) **EP 2 131 281 A1**
(43) Veröffentlichungstag der Anmeldung: **09.12.2009**
(21) Anmeldenummer: 08010059.7
(22) Anmeldetag: 02.06.2008
(51) Int. Cl.: G06F 9/54

(54) **Software-Applikation mit einem Kommunikations-Manager**

(71) Anmelder: SIEMENS AKTIENGESELLSCHAFT, 80333 München (DE)
(72) Erfinder: Horst, André, 76187 Karlsruhe (DE); Richard, Christophe, 67470 Seltz (FR)

(57) **Zusammenfassung**

Die Erfindung betrifft eine Software-Applikation mit einem Kommunikations-Manager (1), welcher die Kommunikation zwischen mindestens zwei Software-Komponenten (OCX1, OCX2, ... OCX7) der Software-Applikation über mindestens einen Buskanal (Bus1, Bus2) eines Kommunikations-Busses der Software-Applikation steuert. Es werden Maßnahmen vorgeschlagen, wodurch eine vereinfachte und verbesserte Kommunikation zwischen den mindestens zwei Software-Komponenten dieser Software-Applikation ermöglicht wird.

## Beschreibung

Die Erfindung betrifft eine Software-Applikation mit einem Kommunikations-Manager, welcher die Kommunikation zwischen mindestens zwei Software-Komponenten über mindestens einen Buskanal eines Kommunikations-Busses der Software-Applikation steuert. Ferner betrifft die Erfindung ein System zum Bedienen und Beobachten eines Ablaufs eines zu steuernden technischen Prozesses mit einer derartigen Software-Applikation.

Aus dem Siemens-Katalog "ST PCS 7 - November 2007", Kapitel 5 ist ein Operator-System eines Prozessleitsystems bekannt, welches zum Bedienen und Beobachten eines technischen Prozesses vorgesehen ist. Dazu weist das Operator-System eine Software-Applikation (Anwenderprogramm) mit mehreren Software-Komponenten in Form von so genannten OCX-Objekten bzw. OCX-Komponenten auf. OCX-Objekte sind Software-Komponenten (OLE Controls, basierend auf einem VBX-Standard der Firma Microsoft), die ihre Dienste über eine COM-definierte Software-Schnittstelle zur Verfügung stellen (Component Object Model der Firma Microsoft). Durch die Verwendung dieser OCX-Komponenten können Software-Module verschiedener Hersteller in Programme integriert werden, wobei derartige softwaretechnische Maßnahmen auch unter der OLE-Technologie der Firma Microsoft bekannt sind (Object Linking (Verknüpfen) and Embedding (Einbetten)). Beispielsweise ist es möglich, eine in einer OCX-Komponente hinterlegte Abbildung eines Anlagenteils, z. B. ein Foto eines Heizkessels, in eine Bedien- und Beobachtungs-Applikation des Operator-Systems einzubetten bzw. einzubinden und diese Abbildung mit weiteren Anlagenteilen auf einer Anzeige des Operator-Systems darzustellen.

Im Rahmen dieser bekannten Software-Applikation ist es nicht möglich, dass ein Ereignis in einer OCX-Komponente direkt eine Aktion in einer weiteren OCX-Komponente auslöst, was bedeutet, dass mehrere OCX-Komponenten, die eine Einheit zur Verwirklichung der Bedien- und Beobachtungs-Funktionalitäten bilden, nicht direkt zusammenwirken können.

Zur Lösung dieses Problems kann software-technisch zwischen OCX-Komponenten ein Controller eingesetzt werden, welcher Ereignisse dieser OCX-Komponenten "mithört" und z. B. aufgrund eines Ereignisses einer der OCX-Komponenten an einer anderen dieser OCX-Komponenten eine Aktion ausführt. Eine "direkte" OCX-OCX-Kommunikation ist nicht möglich.

Der vorliegenden Erfindung liegt die Aufgabe zugrunde, eine Software-Applikation der eingangs genannten Art mit einer vereinfachten und verbesserten Kommunikation zwischen mindestens zwei Software-Komponenten dieser Software-Applikation anzugeben. Darüber hinaus ist ein System zum Bedienen und Beobachten eines Ablaufs eines zu steuernden technischen Prozesses mit einer derartigen Software-Applikation zu schaffen.

Im Hinblick auf die Software-Applikation wird diese Aufgabe durch die im Anspruch 1 angegebenen, im Hinblick auf das System durch die im Anspruch 3 angegebenen Maßnahmen gelöst.

Vorteilhaft ist, dass eine Software-Komponente, z. B. eine Software-Komponente in Form einer OCX-Komponente, ihr Ereignis direkt über einen Kommunikations-Bus in Form des mindestens einen Buskanals anzeigen kann und jede an diesem Buskanal angemeldete weitere OCX-Komponente das Ereignis mithört. Erkennt die OCX-Komponente, dass das Ereignis für sie von Bedeutung ist, kann diese OCX-Komponente eigenständig eine Aktion ausführen. Beispielsweise kann eine OCX-Komponente, welche alle Ordner eines Laufwerks auf einer Anzeigeeinheit eines Bedien- und Beobachtungssystems darstellt, im Rahmen einer Verzeichnis- bzw. Ordnerauswahl durch einen Bediener mittels einer Bedieneinheit eine Nachricht "Ordner XYZ ausgewählt" über den Bus signalisieren. Eine weitere OCX-Komponente, welche alle Dateien eines Ordners in einer Tabelle anzeigt, empfängt diese Nachricht und zeigt schließlich automatisch die Dateien des ausgewählten Ordners an. Auf einen Einsatz eines Controllers zwischen den OCX-Komponenten kann verzichtet werden, die OCX-Komponenten können unabhängig in der Software-Applikation integriert werden. Die Nachrichten werden über den Kommunikations-Bus z. B. in einem XML-Format übermittelt, wobei jede OCX-Komponente lediglich die Nachrichten bearbeitet, welche sie auswerten bzw. interpretieren kann. Können mehrere OCX-Komponenten bzw. Busteilnehmer die Nachrichten interpretieren, führt jede dieser OCX-Komponenten jeweils eine entsprechende Aktion aus. Für den Fall, dass OCX-Komponenten des gleichen Typs an dem gleichen Buskanal angemeldet sind, führen diese jeweils die gleiche Aktion aus. Soll dies vermieden werden, müssen sich die OCX-Komponenten an unterschiedlichen Buskanälen anmelden. Für den Fall, dass z. B. zwei unabhängigen Ordnerbäumen jeweils eine Datei-Liste zuzuordnen ist, ist es erforderlich, die Kommunikation über unterschiedliche Buskanäle zu regeln. Beispielsweise kommuniziert ein erster Ordnerbaum über einen ersten Buskanal mit einer ersten Datei-Liste, während ein zweiter Ordnerbaum mit einer zweiten Datei-Liste über einen zweiten Buskanal kommuniziert. Das bedeutet, dass der Kommunikations-Bus eine Vielzahl von Buskanälen bzw. Busleitungen umfassen kann, wobei jede OCX-Komponente bzw. jeder Busteilnehmer sich an beliebig vielen Buskanälen bzw. -leitungen "anhängen" kann.

Die Kommunikation über die Buskanäle wird mittels des Kommunikations-Managers gesteuert, welcher die Buskanäle verwaltet und nur einmal in den Software-Applikationsprozess geladen wird. Das bedeutet, für die Software-Applikation ist sowohl lediglich ein Kommunikations-Manager als auch nur ein Kommunikations-Bus vorgesehen. Der Kommunikations-Manager ist in Form einer DLL-Datei (Dynamic Link Library) verwirklicht, welche nur einmal zur Laufzeit der Software-Applikation geladen wird und über welche die OCX-Komponenten kommunizieren. Weitere Software-Applikationen haben keinen Zugriff auf die in die Software-Applikation geladene DLL-Datei. Nachrichten der OCX-Komponenten der Software-Applikation werden nicht an einen anderen Busteilnehmer außerhalb dieser Applikation weitergeleitet, was gewöhnlich im Rahmen der Verwendung von Nachrichtenports (Message-Queues) der Fall ist. Über den Kommunikations-Bus können die OCX-Komponenten unabhängig in einer Applikation platziert werden und trotzdem kommunizieren und interagieren. Nahezu beliebig viele OCX-Komponenten desselben Typs sind in die Applikation integrierbar und die Kommunikation zwischen den einzelnen OCX-Komponenten kann flexibel konfiguriert werden. So kann festgelegt werden, welche OCX-Komponenten miteinander kommunizieren können.

Weitere vorteilhafte Ausgestaltungen der Erfindung ergeben sich aus den weiteren Unteransprüchen.

Anhand der Zeichnung, in der ein Ausführungsbeispiel der Erfindung veranschaulicht ist, werden im Folgenden die Erfindung, deren Ausgestaltungen sowie Vorteile näher erläutert.

### Es zeigen:

- Figur 1: den statischen Aufbau eines Bus-Systems,
- Figur 2: den sequentiellen Ablauf einer Bus-Kommunikation und
- Figur 3: eine OCX-Kommunikation in schematischer Darstellung.

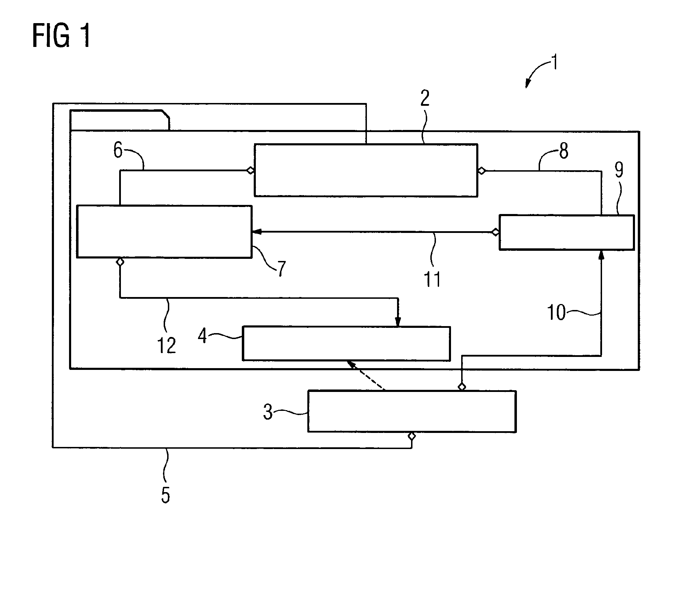

Figur 1 zeigt den statischen Aufbau eines Bus-Systems mittels eines stark vereinfacht dargestellten UML-Diagramms (Unified Modeling Language). Ein Kommunikations-Manager 1 in Form einer DLL-Datei einer Software-Applikation ist mit einem Bus-Manager 2 versehen, welcher Buskanäle verwaltet und an welchem sich zur Laufzeit der Software-Applikation eine OCX-Komponente 3 über eine im Kommunikations-Manager 1 definierte Empfangs-Schnittstelle 4 registriert bzw. anmeldet. Diese von der OCX-Komponente 3 implementierte Empfangs-Schnittstelle 4 erfolgt im Rahmen der Compilierung (Übersetzung) des Source-Codes der Software-Applikation in einen Maschinencode. Die OCX-Komponente 3 kommuniziert mit dem Bus-Manager 2 über einen Kommunikationsweg 5, wobei der Bus-Manager 2 einerseits über einen Kommunikationsweg 6 und über eine Buskanal-Schnittstelle 7 Buskanäle und andererseits über einen Kommunikationsweg 8 eine den Buskanälen zugeordnete Bus-Sender-Schnittstelle 9 verwaltet. Die OCX-Komponente 3 übermittelt einer weiteren OCX-Komponente eine Nachricht, indem die OCX-Komponente 3 über einen Kommunikationsweg 10 und über die Bus-Sender-Schnittstelle 8 einen Bus-Sender anfordert, welcher diese Nachricht über einen Kommunikationsweg 11 der Buskanal-Schnittstelle 7 zuführt. Die OCX-Komponente 3 empfängt Nachrichten von einer weiteren OCX-Komponente, indem die OCX-Komponente 3 an dem Buskanal "mithört", an welchem sie sich über den Bus-Manager 2 anmeldete, wobei die Nachricht über einen mit der Buskanal-Schnittstelle 7 verbundenen Kommunikationsweg 12 der Empfangs-Schnittstelle 4 der OCX-Komponente 3 übermittelt wird.

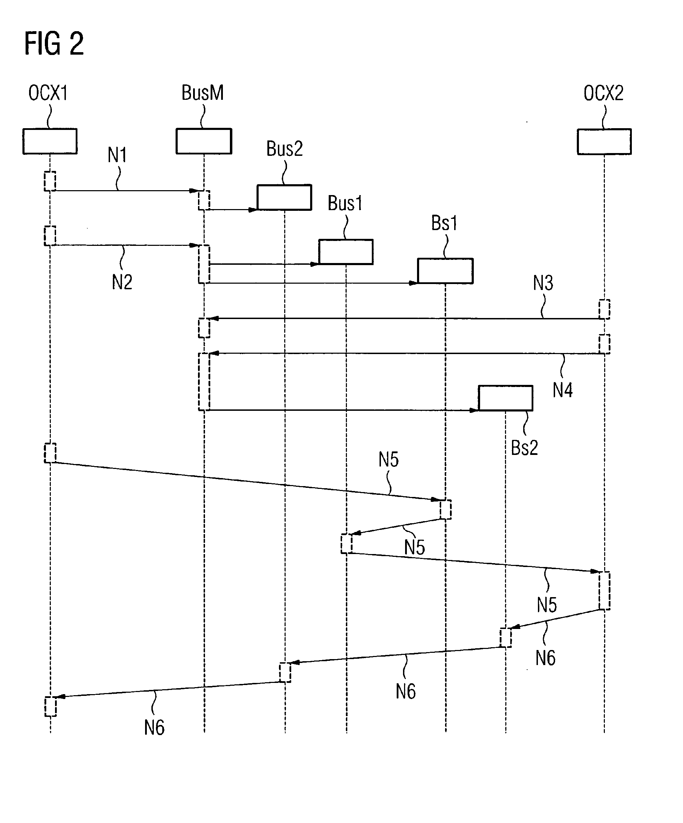

Im Folgenden wird auf Figur 2 verwiesen, in welcher der sequentielle Ablauf einer Bus-Kommunikation in einer Software-Applikation veranschaulicht ist. Dort wird angenommen, dass Nachrichten zwischen einer ersten und einer zweiten OCX-Komponente OCX1, OCX2 über einen ersten und einen zweiten Buskanal Bus1, Bus2 ausgetauscht werden, wobei ferner angenommen wird, dass die erste OCX-Komponente OCX1 ihre Nachrichten über den ersten Buskanal Bus1 sendet und Nachrichten der zweiten OCX-Komponente OCX2 über den zweiten Buskanal Bus2 empfängt, dagegen die zweite OCX-Komponente OCX2 ihre Nachrichten über den zweiten Buskanal Bus2 sendet und Nachrichten der ersten OCX-Komponente OCX1 über den ersten Buskanal Bus1 empfängt. Die vertikal gestrichelten Linien stellen die "Lebensdauer" - d. h. die Existenz im Rahmen der Software-Applikation - der OCX-Komponenten OCX1, OCX2 sowie der Komponenten eines Kommunikations-Managers dar, wobei die gestrichelt eingezeichneten Rechtecke anzeigen, dass gerade ein geeigneter Code dieser OCX-Komponenten OCX1, OCX2 bzw. der Komponenten des Kommunikations-Managers abgearbeitet wird.
Während einer Codeabarbeitung der ersten OCX-Komponente OCX1 registriert bzw. meldet sich zunächst die erste OCX-Komponente OCX1 über eine Registrierungsnachricht N1 an einem Bus-Manager BusM für den zweiten Buskanal Bus2 zum Empfang von Nachrichten an. Dies bedeutet, dass die erste OCX-Komponente OCX1 während der Laufzeit der Software-Applikation stets am zweiten Buskanal Bus2 mithört, ob über diesen Buskanal Bus2 übermittelte Nachrichten für sie bestimmt sind. Während einer weiteren Codeabarbeitung fordert die erste OCX-Komponente OCX1 mittels einer Anforderungsnachricht N2 an den Bus-Manager BusM am ersten Buskanal Bus1 einen ersten Bus-Sender Bs1 an, was darauf hinweist, dass die erste OCX-Komponente OCX1 Nachrichten über den ersten Buskanal Bus1 übermittelt. In der beschriebenen Art und Weise registriert sich während einer Codeabarbeitung der zweiten OCX-Komponente OCX2 diese zweite OCX-Komponente OCX2 über eine Registrierungsnachricht N3 an dem Bus-Manager BusM für den ersten Buskanal Bus1 zum Empfang von Nachrichten. Dadurch ist vorgegeben, dass die zweite OCX-Komponente OCX2 während der Laufzeit der Software-Applikation stets am ersten Buskanal Bus1 mithört, ob über diesen Buskanal Bus1 übermittelte Nachrichten für sie bestimmt sind. Während einer weiteren Codeabarbeitung fordert die zweite OCX-Komponente OCX2 mittels einer Anforderungsnachricht N4 an den Bus-Manager BusM einen zweiten Bus-Sender Bs2 an, was bedeutet, dass Nachrichten der zweiten OCX-Komponente OCX2 über den zweiten Buskanal Bus2 gesendet werden. Im Rahmen einer weiteren Codeabarbeitung sendet die erste OCX-Komponente eine Nachricht N5 über den ersten Bus-Sender Bs1 an den ersten Buskanal Bus1, an welchem die zweite OCX-Komponente OCX2 mithört. Die zweite OCX-Komponente OCX2 empfängt diese Nachricht N5 über ihre Empfangs-Schnittstelle (Figur 1) des Kommunikations-Managers und für den Fall, dass sie die Nachricht interpretieren kann, wird eine Aktion ausgeführt. Die zweite OCX-Komponente OCX2 übermittelt ihrerseits über den zweiten Bus-Sender Bs2 eine Nachricht N6 an den zweiten Buskanal Bus2, an welchem sich die erste OCX-Komponente OCX1 zum Empfang von Nachrichten registriert hat, wobei die Nachricht N6 beispielsweise zum Quittieren der empfangenen Nachricht N5 vorgesehen ist. Über die Empfangs-Schnittstelle der ersten OCX-Komponente OCX1 im Kommunikations-Manager empfängt die erste OCX-Komponente OCX1 die Nachricht N6, wodurch der Informationsaustausch im vorliegenden Beispiel abgeschlossen ist.

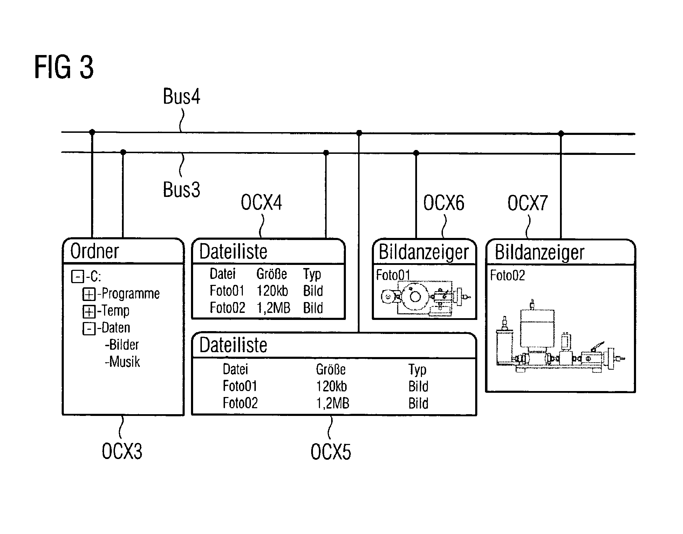

Figur 3 zeigt in schematischer Form eine OCX-Kommunikation zwischen fünf OCX-Komponenten OCX3, OCX4, ... OCX7, von denen die OCX-Komponenten OCX4, OCX6 über einen Buskanal Bus3, die OCX-Komponenten OCX5, OCX7 über einen Buskanal Bus4 und die OCX-Komponente OCX3 sowohl über den Buskanal Bus3 als auch über den Buskanal Bus4 kommunizieren.
Die OCX-Komponente OCX3 verwirklicht eine OCX-Komponente "Ordner", die OCX-Komponenten OCX4, OCX5 jeweils eine OCX-Komponente "Datei-Liste" und die OCX-Komponenten OCX6, OCX7 eine OCX-Komponente "Bildanzeiger". Für den Fall, dass z. B. ein Ordner "Bilder" in der OCX-Komponente OCX3 im Rahmen einer Benutzereingabe ausgewählt wird, signalisiert die OCX-Komponente OCX3 diese Auswahl über die Buskanäle Bus3, Bus4 mit einer entsprechenden Nachricht. Diese Nachricht wird von den jeweiligen OCX-Komponenten OCX4, OCX5, die diese Nachricht interpretieren können, empfangen; die OCX-Komponenten OCX4 und OCX5 stellen die Dateien "Foto01, Foto02" des Ordners "Bilder" in einer Liste dar. Wird eine dieser Dateien "Foto01, Foto02" durch einen Benutzer ausgewählt, signalisiert die OCX-Komponente OCX4 dieses Ereignis über den Buskanal Bus3, die andere über den Buskanal Bus4, wodurch die OCX-Komponenten OCX6, OCX7 die Dateien "Foto01, Foto02", welche sie an ihrem jeweiligen Buskanal Bus3, Bus4 empfangen, als Bild auf einer Anzeigeeinheit eines Bedien- und Beobachtungssystems darstellen.

## Patentansprüche

1. Software-Applikation mit einem Kommunikations-Manager (1), welcher die Kommunikation zwischen mindestens zwei Software-Komponenten (OCX1, OCX2, ... OCX7) der Software-Applikation über mindestens einen Buskanal (Bus1, Bus2) eines Kommunikations-Busses der Software-Applikation steuert, wobei
- die Software-Komponenten (OCX1, OCX2, ... OCX7) eine Empfangs-Schnittstelle (4) des Kommunikations-Managers (1) implementieren,
- der Kommunikations-Manager (1) mit einem Bus-Manager (2; BusM) versehen ist, welcher den mindestens einen Buskanal (Bus1, Bus2) verwaltet und an welchem sich zur Laufzeit der Software-Applikation die Software-Komponenten (OCX1, OCX2, ... OCX7) zum Empfangen von Nachrichten über den mindestens einen Buskanal (Bus1, Bus2) anmelden,
- zur Laufzeit der Software-Applikation die Software-Komponenten (OCX1, OCX2, ... OCX7) zur Übertragung einer Nachricht (N5, N6) einen Bus-Sender (9, Bs1, Bs2) des Kommunikations-Managers (1) für den mindestens einen Buskanal (Bus1, Bus2) anfordern und
- die Software-Komponenten (OCX1, OCX2, ... OCX7) an dem mindestens einen angemeldeten Buskanal (Bus1, Bus2) Nachrichten (N5, N6) mithören.

2. Software-Applikation nach Anspruch 1, **dadurch gekennzeichnet, dass** die Software-Komponenten OCX-Software-Komponenten (OCX1, OCX2, ... OCX7) sind und der Kommunikations-Manager (1) eine DLL-Datei ist.

3. System zum Bedienen und Beobachten eines Ablaufs eines zu steuernden technischen Prozesses mit einer Software-Applikation nach Anspruch 1 oder 2.
